# EUROPÄISCHE PATENTSCHRIFT

(11) **EP 2 143 771 B1**
(45) Veröffentlichungstag und Bekanntmachung des Hinweises auf die Patenterteilung: **25.01.2017**
(21) Anmeldenummer: 09008995.4
(22) Anmeldetag: 10.07.2009
(51) Int. Cl.: C09J 4/00

(54) **KLEBSTOFFZUSAMMENSETZUNG, INSBESONDERE ZUR VERWENDUNG IN DER CHIRURGISCHEN MEDIZIN**
ADHESIVE COMPOUND, IN PARTICULAR FOR USE IN SURGICAL MEDICINE
COMPOSITION DE COLLE, NOTAMMENT POUR L'UTILISATION EN MÉDECINE CHIRURGICALE

(30) Priorität: 10.07.2008 DE 102008033378; 27.01.2009 DE 102009007253
(43) Veröffentlichungstag der Anmeldung: 13.01.2010
(73) Patentinhaber: Aesculap AG, 78532 Tuttlingen/Donau (DE)
(72) Erfinder: Baiker, Anja, 78573 Wurmlingen (DE); Härtel, Claudia, 78532 Tuttlingen (DE); Odermatt, Erich, 8200 Schaffhausen (CH); Siedle, Gabriel, 79117 Freiburg (DE); Wegmann, Jürgen, 78333 Stockach (DE); Sterk, Thomas, 78239 Rielasingen-Worblingen (DE)
(74) Vertreter: Patentanwälte Ruff, Wilhelm, Beier, Dauster & Partner mbB

(56) Entgegenhaltungen:
- US-A- 3 223 083
- US-A1- 2003 202 956
- US-A1- 2006 251 612

## Beschreibung

Die Erfindung betrifft eine Klebstoffzusammensetzung, ein Kit, eine Applikationsvorrichtung sowie die Verwendung der Klebstoffzusammensetzung.

In der modernen Versorgungschirurgie kommt mittlerweile eine Vielzahl von Klebstoffzusammensetzungen zum Einsatz. Häufig basieren die Klebstoffzusammensetzungen auf Proteinen. Ein bekanntes Beispiel hierfür sind die Fibrinkleber. Fibrinkleber zeichnen sich durch eine gute Bioverträglichkeit und durch ihre Resorbierbarkeit aus. Fibrinkleber werden beispielsweise zur Behandlung von blutenden Wunden verwendet. Nachteilig bei den Fibrinklebern ist jedoch ihre geringe Haftkraft. Hinzu kommt, dass Fibrinkleber sehr teuer sind und außerdem eine schlechte Lagerstabilität aufweisen. So müssen Fibrinkleber zur Lagerung bzw. Aufbewahrung eingefroren werden. Dies wiederum macht es erforderlich, dass die Fibrinkleber rechtzeitig vor ihrer Verwendung aufgetaut werden, wodurch der Umgang mit diesen Klebern insgesamt umständlich und aufwendig wird. Darüber hinaus besteht bei Fibrinklebern ein gewisses Risiko für Infektionen. Zudem ist die Aufarbeitung von humanem Material zur Gewinnung von Proteinen teuer.

Klebstoffzusammensetzungen auf der Basis von Cyanoacrylat-Monomeren besitzen dagegen eine hohe Haftkraft und sind relativ preiswert. Da es sich um synthetische Klebstoffzusammensetzungen handelt, besteht zudem keine Infektionsgefahr. Problematisch hierbei kann jedoch die langsame Resorption des ausgehärteten Klebers sowie eine geringe Kleberflexibilität, insbesondere im Hinblick auf weiche und dehnbare Gewebe, sein. Da im Falle von blutenden oder nässenden Wunden außerdem die Gefahr besteht, dass die Cyanoacrylat-Monomere aus dem Wundbereich gespült werden, ehe die Klebstoffzusammensetzung aushärtet, eignen sich Klebstoffzusammensetzungen auf der Basis von Cyanoacrylat-Monomeren hauptsächlich zur Versorgung von trockenen Wunden.

Eine Klebstoffzusammensetzung der Anmelderin auf der Basis einer flüssigen Cyanoacrylatkomponente und einer flüssigen Polysaccharidkomponente ist aus der DE 10 2005 007 920 A1 bekannt. Die Klebstoffzusammensetzung eignet sich in besonderer Weise zum Verschluss bzw. zum Kleben von biologischen Geweben. Allerdings kann abhängig vom Polysaccharid, beispielsweise bei Carboxymethylcellulose, eine Entmischung der Polysaccharid- und Cyanoacrylatkomponente stattfinden, ehe die Klebstoffzusammensetzung ausgehärtet ist. Darüber hinaus sind manche Polysaccharidderivate, beispielsweise Aminogruppen tragende Polysaccharide, nur in einem sauren Milieu löslich, wodurch die anionische Polymerisation der Cyanoacrylatkomponente verzögert wird.

Ein Gewebekleber auf der Basis von Methylcyanoacrylat und Gelatine, der sich vor allem zur Behandlung von Knochendefekten eignet, ist aus der US 3,223,083 bekannt. Hierbei handelt es sich jedoch um einen eher harten und insbesondere spröden Kleber, wodurch seine allgemeine Verwendbarkeit, insbesondere im Hinblick auf die Versorgung von Weichgewebedefekten, eingeschränkt ist.

Aus der US 2006/0251612 A1 geht eine Klebstoffzusammensetzung auf Basis von Cyanoacrylat-Monomeren sowie eines in Körperflüssigkeiten löslichen Additivs, bei welchem es sich beispielsweise um Gelatine handeln kann, hervor.

Die US 2003/0202956 A1 betrifft eine Klebstoffzusammensetzung zur Verklebung von Gewebeoberflächen, welche ebenfalls auf Cyanoacrylat-Monomeren basiert und zudem einen Weichmacher enthalten kann.

Eine cyanoacrylatbasierte Klebstoffzusammensetzung mit einem Weichmacheranteil von bis zu 25 Gew.% ist aus der US 4,444,933 bekannt.

In der US 6,773,699 B1 wird ein Patch auf der Basis von Cyanoacrylat und Gelatine zur Verklebung von biologischen Geweben beschrieben. Das Patch wird direkt auf der zu behandelnden Körperstelle durch Bestrahlen mit einem Laser hergestellt. Dabei wird zunächst das Cyanoacrylat auf die zu behandelnde Körperstelle aufgetragen, welches anschließend zu einer Schicht aus Polycyanoacrylat aushärtet. Auf diese Schicht wird chemisch modifiziertes Kollagen aufgetragen, welches im Anschluss daran mit einem Laser bestrahlt wird. Nachteilig bei der in der US 6,773,699 B1 geschilderten Vorgehensweise ist der Einsatz der Lasertechnologie, welche das Verfahren aufwendig und insbesondere teuer macht. Außerdem besteht das Risiko, dass gesundes Gewebe beschädigt wird.

Weitere Zusammensetzungen zur Reparatur von biologischen Geweben sind aus der WO 96/10428 A1 bekannt. Die Zusammensetzungen lässt man in-situ zu einem Implantat polymerisieren. Als bevorzugte Komponenten für die Zusammensetzungen werden unter anderem Körperproteine bzw. deren Vorstufen, beispielsweise Fibrin bzw. Fibrinogen, genannt. Hinsichtlich dieser Proteine bestehen allerdings die bereits eingangs erwähnten Bedenken.

Die Erfindung stellt sich daher die Aufgabe, eine Klebstoffzusammensetzung bereitzustellen, welche sich insbesondere zur Verwendung in der chirurgischen Medizin eignet und aus dem Stand der Technik bekannte Probleme vermeidet. Darüber hinaus soll die erfindungsgemäße Klebstoffzusammensetzung möglichst einfach herstellbar und für den Anwender möglichst komplikationsarm handhabbar sein.

Diese Aufgabe wird erfindungsgemäß gelöst durch eine Klebstoffzusammensetzung, insbesondere zur Verwendung in der Medizin, vorzugsweise chirurgischen Medizin, umfassend zumindest folgende Komponenten a) und b):
a) eine flüssige Mischung, umfassend Cyanoacrylat-Monomere und zumindest einen Weichmacher, und
b) eine wässrige Flüssigkeit, umfassend zumindest eine Verbindung aus der Gruppe basische Aminosäure und Gelatinederivat, wobei es sich bei dem Gelatinederivat um acylierte Gelatine handelt.

Überraschenderweise konnte festgestellt werden, dass bei Vermischung der Komponenten a) und b) eine Dispersion, vorzugsweise Suspension, erhalten wird, welche zu einem Kleber, insbesondere Gewebekleber, aushärtbar ist. Es konnte insbesondere beobachtet werden, dass die Komponenten a) und b) zu einer aushärtbaren Dispersion vermischbar sind, ohne dass eine merkliche Entmischung der Komponenten a) und b) stattfindet. Insoweit hat sich nämlich herausgestellt, dass der zumindest eine, in der Komponente a) enthaltene Weichmacher für eine verbesserte Durchmischung der Cyanoacrylat-Monomere und der zumindest einen Verbindung sorgt. Ein weiterer Vorteil der Klebstoffzusammensetzung besteht darin, dass die in der Komponente b) enthaltene zumindest eine Verbindung als Initiator bzw. Aktivator für die anionische Polymerisation der Cyanoacrylat-Monomere dient. Dies führt mit besonderem Vorteil zu schnelleren Aushärtungszeiten. Der durch Vermischen der Komponenten a) und b) entstehende Kleber ist deutlich weicher und insbesondere flexibler als ein reiner Cyanoacrylat-Kleber, so dass insgesamt auch eine verbesserte Gewebeverträglichkeit gegeben ist. So weist der aus der erfindungsgemäßen Klebstoffzusammensetzung resultierende Kleber vor allem eine im Vergleich zu herkömmlichen Klebstoffzusammensetzungen verbesserte Elastizität auf. Dies ist vor allem in Bezug auf sich ausdehnende Gewebe, beispielsweise das Lungengewebe, oder pulsierende Gewebe, beispielsweise Blutgefäße, von besonderem Vorteil. Ein harter, spröder Kleber, wie beispielsweise in der US 3,223,083 beschrieben, ist für derartige Anwendungen nicht geeignet. Bei einem derartigen Kleber bestünde vielmehr das Risiko, dass er sich von dem zu versorgenden Gewebe ablöst oder aber sich in das zu versorgende Gewebe einschneidet.

Der aus der Klebstoffzusammensetzung ausgehend von den Komponenten a) und b) hervorgehende Kleber weist bevorzugt ein dreidimensionales Netzwerk auf, das durch Polycyanacrylat und die zumindest eine Verbindung gebildet wird. Ein besonderer Vorteil besteht in der allgemein schnellen Resorbierbarkeit des aus der Klebstoffzusammensetzung hervorgehenden Klebers im Vergleich zu reinem Polycyanacrylat. Handelt es sich bei der zumindest einen Verbindung um ein Gelatinederivat, so zeichnet sich der durch Aushärtung der erfindungsgemäßen Klebstoffzusammensetzung entstehende Kleber durch eine schnellere Resorbierbarkeit aus. Dies hängt damit zusammen, dass der Gelatineanteil des fertigen Klebers im Verhältnis zum Polycyanacrylat relativ schnell resorbiert wird. Die nach Resorption des Gelatineanteils zurückbleibende poröse Polycyanacrylatmatrix wird wiederum schneller resorbiert als reines bzw. kompaktes Polycanacrylat. Darüber hinaus besitzen Cyanoacrylate mit besonderem Vorteil auch eine antimikrobielle Wirkung, wodurch beispielsweise das Risiko von Wundinfektionen verringert werden kann. Deswegen eignet sich die erfindungsgemäße Klebstoffzusammensetzung unter anderem auch für eine antimikrobielle Versiegelung von Hautwunden.

Unter einem Kleber bzw. einer Klebstoffverbindung im Sinne der vorliegenden Erfindung soll das Aushärtungsprodukt verstanden werden, welches sich nach Durchmischen der Komponenten a) und b) der Klebstoffzusammensetzung bildet.

Unter einem Polycyanacrylat im Sinne der vorliegenden Erfindung soll ein durch Polymerisation von Cyanoacrylat-Monomeren erhältliches bzw. erhaltbares Polymer verstanden werden.

In einer bevorzugten Ausführungsform liegen die Komponenten a) und b) räumlich voneinander getrennt vor. Bevorzugt sind die Komponenten a) und b) jeweils in einem Kompartiment, insbesondere Behältnis, einer geeigneten Applikationsvorrichtung enthalten. Bei der Applikationsvorrichtung kann es sich beispielsweise um eine Zwillings- oder Zweikammerspritze oder um eine Sprüh- bzw. Sprayvorrichtung, beispielsweise um einen Zerstäuber, handeln. Besonders vorteilhaft sind Behältnisse bzw. Container, die eine wasserundurchlässige Schicht, eine wasserundurchlässige Außenhaut oder eine wasserundurchlässige Verpackung aufweisen.

Der zumindest eine Weichmacher ist vorzugsweise ein in Cyanoacrylat-Monomeren löslicher Weichmacher. Erfindungsgemäß ist es dabei besonders bevorzugt, dass die Komponente a) in Form einer Lösung vorliegt, wobei die flüssigen Cyanoacrylat-Monomere als Lösungsmittel bzw. Lösungsmittelgemische fungieren. Lösungen besitzen gegenüber flüssigen Dispersionen, insbesondere Suspensionen, allgemein den Vorteil, dass sie besser handhabbar und applizierbar sind. Beispielsweise lassen sich Lösungen besser injizieren oder versprühen als flüssige Dispersionen. Zudem haben Lösungen auch hinsichtlich ihrer Lagerfähigkeit Vorteile gegenüber flüssigen Dispersionen.

In einer weiteren Ausführungsform ist der zumindest eine Weichmacher ein gegenüber Cyanoacrylat-Monomeren inerter Weichmacher. Ein inerter Weichmacher hat den Vorteil, dass eine vorzeitige anionische Polymerisation der Cyanoacrylat-Monomere und damit eine vorzeitige Aushärtung der Komponente a) verhindert wird. Dadurch kann insgesamt die Lagerstabilität der Klebstoffzusammensetzung erhöht werden. Gemäß einer besonders vorteilhaften Ausführungsform handelt es sich bei dem zumindest einen Weichmacher der Komponente a) um einen in Cyanoacrylat-Monomeren löslichen und gegenüber Cyanoacrylat-Monomeren inerten Weichmacher.

Abhängig vom Anteil des zumindest einen Weichmachers in der Komponente a) kann durch Vermischen bzw. Vermischung der Komponenten a) und b) und Aushärtung der Klebstoffzusammensetzung eine weiche bis harte Masse erhalten werden. Erfindungsgemäß kann die Klebstoffzusammensetzung durch Vermischen der Komponenten a) und b) zu einem Gel, einer Paste oder einer vorzugsweise flexiblen Membran aushärtbar sein. Beispielsweise lässt sich ein hartes bzw. festes Gel aus einer Klebstoffzusammensetzung herstellen, deren Komponente a) einen Weichmacheranteil von ca. 25 Gew.-%, bezogen auf das Gesamtgewicht der Komponente a), aufweist. Weiche Gele können dagegen ausgehend von Klebstoffzusammensetzungen erhalten werden, deren Komponente a) einen Weichmacheranteil zwischen 30 und 70 Gew.-%, bezogen auf das Gesamtgewicht der Komponente a), aufweist.

Der Anteil des zumindest einen Weichmachers in der Komponente a) kann grundsätzlich bis zu 80 Gew.-%, bezogen auf das Gesamtgewicht der Komponente a), betragen. Erfindungsgemäß weist der zumindest eine Weichmacher in der Komponente a) einen Anteil größer als 10 Gew.-% auf, bezogen auf das Gesamtgewicht der Komponente a). In einer weitergehenden Ausführungsform weist der zumindest eine Weichmacher einen Anteil größer als 20 Gew.-%, insbesondere zwischen 25 und 75 Gew.-%, bevorzugt 25 und 70 Gew.-%, besonders bevorzugt 25 und 50 Gew.-%, bezogen auf das Gesamtgewicht der Komponente a), auf. Wie bereits erwähnt, lässt sich durch den Weichmacheranteil die Härte bzw. Weichheit des durch die erfindungsgemäße Klebstoffzusammensetzung herstellbaren Klebers einstellen bzw. regulieren.

In einer weiteren Ausführungsform weist die Klebstoffzusammensetzung nach Vermischen bzw. Vermischung der Komponenten a) und b) eine Topf- bzw. Gelzeit t von 0 < t ≤ 300 s, insbesondere 1 ≤ t ≤ 120 s, vorzugsweise 1 ≤ t ≤ 60 s, auf. Als Topf- bzw. Gelzeit wird die Zeit definiert, ab welcher die viskoelastischen Eigenschaften die fließfähigen Eigenschaften einer mehrkomponentigen Mischung übersteigen. Durch die kurze Topf- bzw. Gelzeit kommt es mit besonderem Vorteil zu einer raschen Aushärtung der Klebstoffzusammensetzung nach Vermischung der Komponenten a) und b). Dadurch können sich die klebenden bzw. verklebenden Eigenschaften der Klebstoffzusammensetzung in relativ kurzer Zeit im Bereich der chirurgisch zu versorgenden Körperregion eines Patienten entfalten, ohne dass die Klebstoffzusammensetzung, insbesondere deren Komponenten a) und b), aus der zu versorgenden Körperregion durch Körperflüssigkeiten weggespült werden. Erfindungsgemäß können weiterhin auch längere Topf- bzw. Gelzeiten bevorzugt sein. So sind längere Topfzeiten insbesondere dann wünschenswert, wenn die Klebstoffzusammensetzung auf Blut bzw. flüssigkeitsfreiem Gewebe aufgetragen wird. Eine längere Topfzeit ermöglicht in diesen Fällen dem Chirurgen die Positionierung von zu verbindenden Gewebeteilen nach Applikation der Klebstoffzusammensetzung.

Die Komponenten a) und b) liegen vorzugsweise in einem Volumen-Mischungsverhältnis zwischen 1:10 und 10:1, vorzugsweise 1:2 und 2:1, vor. Derartige Volumen-Mischungsverhältnisse erlauben in besonderer Weise eine rasche Aushärtung der Komponenten a) und b).

Erfindungsgemäß können die Cyanoacrylat-Monomere aus der Gruppe Alkyl-Cyanoacrylat-Monomere, Alkoxyalkyl-Cyanoacrylat-Monomere, Alkylester-Cyanoacrylat-Monomere und Mischungen davon ausgewählt sein. Die vorstehend genannten Cyanoacrylat-Monomere weisen in einer weiteren Ausführungsform eine Alkylgruppe mit 1 bis 20, insbesondere 2 bis 10, vorzugsweise 4 bis 8, Kohlenstoffatomen auf. Bevorzugt sind die Cyanoacrylat-Monomere aus der Gruppe n-Butyl-Cyanoacrylat-Monomere, i-Butyl-Cyanoacrylat-Monomere, n-Hexyl-Cyanoacrylat-Monomere, n-Octyl-Cyanoacrylat-Monomere, Ethoxyethyl-Cyanoacrylat-Monomere, Methoxypropyl-Cyanoacrylat-Monomere, Methoxybutyl-Cyanoacrylat-Monomere, Butyllactoyl-Cyanoacrylat-Monomere und Mischungen davon ausgewählt. Besonders bevorzugt sind die Cyanoacrylat-Monomere aus der Gruppe n-Butyl-Cyanoacrylat-Monomere, n-Octyl- Cyanoacrylat-Monomere, Ethoxyethyl-Cyanoacrylat-Monomere und Mischungen davon ausgewählt. N-Butyl-Cyanoacrylat-Monomere sind vor allem wegen ihrer hohen Haftkraft bevorzugt. Sie sind unter der Bezeichnung Histoacryl® oder Indermil® kommerziell erhältlich. Ethoxyethyl-Cyanoacrylat-Monomere und/oder Methoxybutyl-Cyanoacrylat-Monomere sind hauptsächlich wegen ihrer schnellen Resorbierbarkeit bevorzugt.

Bei dem zumindest einen Weichmacher kann es sich grundsätzlich um einen organischen Ester und/oder Ether handeln. Zweckmäßigerweise handelt es sich bei dem zumindest einen Weichmacher um einen bioverträglichen Ester bzw. Ether. Bevorzugt ist der zumindest eine Weichmacher aus der Gruppe Zitronensäureester, Glycerinester, Sebacinsäureester, Fettsäureester, Celluloseester, Polyethylenglykolether und Mischungen davon ausgewählt. So kann der zumindest eine Weichmacher beispielsweise aus der Gruppe Glycerintriacetat, Tributylacetylcitrat, Glycerintriopropionat, Glycerintributyrat, Tricaproin, Trivalerin, Tricaprin, Isobutylmyristat, Ethylmyristat, Ethylstearat, Methylsebacat, Ethylsebacat, Ethylcellulose, Polyethylenglykoldiether, vorzugsweise Polyethylenglykoldimethylether, und Mischungen ausgewählt sein.

In einer bevorzugten Ausführungsform weist die zumindest eine Verbindung in der Komponente b) einen Anteil zwischen 0,01 und 25 Gew.-%, insbesondere 0,1 und 25 Gew.-%, bevorzugt 0,1 und 10 Gew.-%, besonders bevorzugt 0,5 und 10 Gew.-%, insbesondere 0,5 und 5 Gew.-%, bezogen auf das Gesamtgewicht der Komponente b), auf.

In einer weiteren bevorzugten Ausführungsform ist die basische Aminosäure aus der Gruppe Histidin, Lysin, Arginin, Derivate davon und Mischungen davon ausgewählt. Besonders bevorzugt sind Histidin und/ oder Histidinderivate.

Erfindungsgemäß handelt es sich bei der zumindest einen Verbindung um zumindest ein Gelatinederivat. Das Gelatinederivat kann ein Molekulargewicht zwischen 10 und 500 kDa, vorzugsweise 20 und 100 kDa, aufweisen. Bei dem Gelatinederivat handelt es sich um acylierte Gelatine. Acylierte Gelatine besitzt den Vorteil, dass sie in höheren Konzentrationen in wässrigen Medien löslich ist. Dadurch kann ein höherer Gelatineanteil in der Komponente b) der Klebstoffzusammensetzung bereitgestellt werden. Ein höherer Gelatineanteil bewirkt wiederum eine schnellere Aktivierung der Cyanoacrylat-Monomere und damit eine schnellere Aushärtung der Klebstoffzusammensetzung sowie eine bessere Bioverträglichkeit. Bevorzugt sind die Gelatinederivate aus der Gruppe Gelatinepolysuccinat, acetylierte Gelatine und Phthaloyl-Gelatine ausgewählt.

Die Komponente b) liegt vorzugsweise in Form einer wässrigen Lösung vor. Bevorzugt weist die Komponente b) einen pH-Wert zwischen 3,0 und 8,0 auf. Der neutrale pH-Wert der Komponente b) bewirkt zum Einen eine gewisse Bioverträglichkeit beim Auftrag der Klebstoffzusammensetzung auf eine chirurgische Applikationsstelle. Zum anderen hat ein neutraler pH-Wert auf die Polymerisation der Cyanoacrylat-Monomere keine nachteiligen Auswirkungen.

Erfindungsgemäß ist es weiterhin möglich, dass auch die Komponente b) zumindest einen Weichmacher aufweist. Als mögliche Weichmacher kommen grundsätzlich Mannitol, Ethylenglykol, flüssige Polyethylenglykole, Propylen-1,2-Glykol, flüssige Polypropylen-1,2-Glykole, Propylen-1,3-Glykol, flüssige Polypropylen-1,3-Glykole, Zitronensäuretrialkylester, Milchsäureester, Glykolsäureester, Glycerin, 2-Ethyl-2-Hydroxymethyl-1,3-Propandiol und/oder verzweigte Polyole in Betracht. Im Falle von Zitronensäuretrialkylester kann es sich insbesondere um Triethylcitrat und/oder Trimethylcitrat handeln. Geeignete Milchsäureester stellen Methyl- und/ oder Ethyllactat dar. Bevorzugt weist die Komponente b) Glycerin als Weichmacher auf. Grundsätzlich kann die Komponente b) einen Weichmacheranteil zwischen 0 und 75 Gew.-%, insbesondere 25 und 50 Gew.-%, bezogen auf das Gesamtgewicht der Komponente b), aufweisen.

In einer weitergehenden Ausführungsform ist die Viskosität der Komponenten a) und/oder b) so eingestellt, dass die viskoelastischen Eigenschaften der durch Vermischen der Komponenten a) und b) unmittelbar entstehenden Mischung groß genug sind, dass die Mischung nicht von der chirurgischen Applikationsstelle abfließen kann, bevor die Klebstoffzusammensetzung ausgehärtet ist. Bevorzugt weist die Komponente a) bei einem Weichmacheranteil von 30 Gew.-% und einer Temperatur von 22°C eine Viskosität zwischen 1 und 100 mPas, insbesondere 3 und 20 mPas, auf. Die Komponente b) weist bei einem Gelatinederivatanteil von 4 Gew.-% und einer Temperatur von 22°C vorzugsweise eine Viskosität zwischen 1 und 100 mPas, insbesondere 1 und 50 mPas, auf. Besonders bevorzugt sind die Viskositäten der Komponenten a) und b) ähnlich bzw. im Wesentlichen gleich, da auf diese Weise eine gute Durchmischung erreicht werden kann.

Erfindungsgemäß kann es weiterhin vorgesehen sein, dass die Komponente a) und/oder die Komponente b) zusätzliche Additive enthalten. Im Hinblick auf die Komponente a) kommen beispielsweise Stabilisatoren wie Säuren bzw. Säureanhydride in Betracht. Diese können in der Komponente a) in einem Anteil zwischen 50 und 3000 ppm enthalten sein. Als Stabilisatoren kommen insbesondere Schwefeldioxid, Schwefelsäure, Essigsäure, Phosphorsäure, Borsäurederivate, Sulfonsäuren und Fettsäuren in Betracht. Weiterhin kann die Komponente a) Radikalfänger, insbesondere in einem Anteil zwischen 500 und 5000 ppm, aufweisen. Beispiele für geeignete Radikalfänger sind Hydrochinon, t-Butyl-Hydroxy-anisol und/oder 3,5-Di-tert.-butyl-4-hydroxytoluol. Die Komponente b) kann beispielsweise blutgerinnungsfördernde Mittel, insbesondere Calciumsalze, aufweisen bzw. enthalten. Weiterhin kann die Komponente b) Formaldehydfänger, welche beim Abbau von Polycyanacrylaten entstehendes Formaldehyd binden, enthalten. Beispiele für derartige Formaldehydfänger sind Sulfit, Bisulfit, Ammoniumsulfit und/oder Harnstoffsalze.

Weiterhin kann die Komponente a) und/oder b) wundheilungsfördernde Mittel, beispielsweise Hyaluronsäure und/oder Zinkverbindungen, enthalten. Als Zinkverbindungen kommen in der Regel Zinksalze in Betracht. Beispielsweise kann es sich bei den Zinkverbindungen um Zinkoxid und/oder Zinkhyaluronat handeln.

Die erfindungsgemäße Klebstoffzusammensetzung wird, wie bereits mehrfach erwähnt, besonders bevorzugt in der Medizin, insbesondere Chirurgie, eingesetzt. Mit anderen Worten handelt es sich bei der Klebstoffzusammensetzung gemäß der vorliegenden Erfindung bevorzugt um eine medizinische, insbesondere chirurgische, Klebstoffzusammensetzung. Besonders bevorzugt eignet sich die erfindungsgemäße Klebstoffzusammensetzung zur Verklebung von menschlichen und/oder tierischen Hart- und/oder Weichgeweben und/oder zum antimikrobiellen Verschluss von oberflächlichen und/oder inneren Wunden.

Des weiteren betrifft die vorliegende Erfindung auch einen Kleber bzw. eine Klebstoffverbindung, welcher bzw. welche aus der erfindungsgemäßen Klebstoffzusammensetzung hergestellt oder herstellbar ist. Wie ebenso bereits erwähnt, entsteht ein derartiger Kleber bzw. eine derartige Klebstoffverbindung nach Durchmischen der Komponenten a) und b) durch Polymerisation der Cyanoacrylat-Monomere zu einem Polycyanacrylat, wobei die zumindest eine Verbindung gemäß der vorliegenden Erfindung als Aktivator bzw. Initiator für die Polymerisation der Cyanoacrylat-Monomere dient und das entstandene Polycyanacrylat vorzugsweise zusammen mit der zumindest einen Verbindung ein dreidimensionales Netzwerk bildet. Bezüglich weiterer Merkmale und Einzelheiten zu dem erfindungsgemäßen Kleber bzw. der erfindungsgemäßen Klebstoffzusammensetzung wird vollständig auf die bisherige Beschreibung Bezug genommen.

Ein weiterer Aspekt der Erfindung betrifft ein Kit, das zumindest zwei, vorzugsweise zwei, Behältnisse aufweist, wobei das eine Behältnis die Komponente a) und das andere Behältnis die Komponente b) der Klebstoffzusammensetzung aufweist. Die Behältnisse des Kits liegen gewöhnlich getrennt voneinander vor. Bevorzugt sind die beiden Behältnisse als Kammern einer Zweikammerspritze oder einer Sprühvorrichtung, vorzugsweise eines Zerstäubers, ausgebildet. Alternativ dazu kann es sich bei den Behältnissen auch um zumindest zwei Einzelspritzen oder -kartuschen handeln, welche über eine Halterung bzw. einen Konnektor miteinander verbunden sind. Die Applikation kann in diesem Fall beispielsweise mit Hilfe eines Zwillingsausgabegerätes erfolgen. Dadurch ist mit besonderem Vorteil eine getrennte Abfüllung, Sterilisierung und Lagerung bzw. Aufbewahrung der Komponenten a) und b) möglich. Weiterhin können die Behältnisse des Kits voneinander verschieden hergestellt sein. Erfindungsgemäß kann es zudem vorgesehen sein, dass das Kit eine Einrichtung zur Vermischung der Komponenten a) und b), insbesondere einen statischen oder dynamischen Mischer oder einen Sprühkopf, aufweist. Die Einrichtung zur Vermischung der Komponenten a) und b) ist vorzugsweise austauschbar. Die Einrichtung zur Vermischung der Komponenten a) und b) ist weiterhin vorzugsweise auf eine Zweikammerspritze oder Sprühvorrichtung aufsteckbar. Durch das Versprühen der Komponenten a) und b) kann in vorteilhafter Weise eine homogene Durchmischung der Komponenten erzielt werden. Außerdem kann durch Sprühen der Klebstoffzusammensetzung die bei Aushärtung der Zusammensetzung auftretende Exothermie verringert werden, welche ansonsten eventuell zu einer Schädigung von Gewebe führt. Das Sprühen kann durch Druckluft, ein geeignetes Gas, beispielsweise Stickstoff oder Kohlendioxid, ein Pumpsprühsystem oder durch Druckbeaufschlagung eines Spritzenstempels bzw. -kolbens erfolgen. Die Vermischung der Komponenten a) und b) kann vor oder nach dem Sprühen stattfinden. Bei einer Durchmischung der Komponenten a) und b) nach dem Sprühen ist allerdings die Gefahr eines Verklebens der Sprühvorrichtung geringer. Bezüglich weiterer Einzelheiten und Merkmale des Kits wird auf die bisherige Beschreibung Bezug genommen.

Die Erfindung betrifft außerdem eine Applikationsvorrichtung, welche die Klebstoffzusammensetzung enthält. Bevorzugt weist die Applikationsvorrichtung zumindest zwei im Wesentlichen voneinander getrennt vorliegende Kompartimente, insbesondere Behältnisse, auf, wobei das eine Kompartiment die Komponente a) und das andere Kompartiment die Komponente b) enthält. Die Applikationsvorrichtung ist dabei bevorzugt als Zweikammerspritze oder Sprühvorrichtung, insbesondere Zerstäuber, ausgebildet. Weiterhin kann die Applikationsvorrichtung auch zwei Einzelspritzen oder -kartuschen umfassen. Darüber hinaus kann die Applikationsvorrichtung als Dosiervorrichtung ausgebildet sein, welche vorzugsweise Arretiereinheiten als Äquivalente für Dosiseinheiten aufweist. Bezüglich weiterer Einzelheiten und Merkmale des Kits wird auf die bisherige Beschreibung verwiesen.

Schließlich betrifft die Erfindung auch die Verwendung einer a) flüssigen Mischung, umfassend Cyanoacrylat-Monomere und zumindest einen Weichmacher mit einem Weichmacheranteil in der Komponente a) größer als 10 Gew.-%, bezogen auf das Gesamtgewicht der Komponente a), und b) einer wässrigen Flüssigkeit, umfassend zumindest eine Verbindung aus der Gruppe basische Aminosäure und Gelatinederivat, zur Herstellung einer Klebstoffzusammensetzung zur Verwendung in der Medizin, insbesondere chirurgischen Medizin, vorzugsweise zur Versiegelung von Flüssigkeits- und/oder Luftleckagen und/oder zur Verbindung von Gewebeteilen im menschlichen und/oder tierischen Körper. Außerdem eignet sich die Klebstoffzusammensetzung auch zur Versiegelung bzw. zum Verschluss von Hohlräumen und/oder Gefäßen im menschlichen und/ oder tierischen Körper. Besonders bevorzugt wird die Klebstoffzusammensetzung zur Behandlung bzw. Versorgung von Weichgewebedefekten verwendet. Die Klebstoffzusammensetzung eignet sich dabei insbesondere zum antimikrobiellen Verschluss von oberflächlichen und/oder inneren Wunden, zur Fixierung von Herniennetzen bei Hernienoperationen, zur Blutstillung, zur Versiegelung von Darmleckagen, zur Versiegelung von Stichkanalblutungen, zur Versiegelung von Blasen- und/oder Harnleiterleckagen, zur Versiegelung von Lungenleckagen, zur Abdichtung von Herzbeuteln, zur Versiegelung von Darm- oder Gefäßanastomosen, zur Behandlung von Verletzungen der Dura Mater und/oder zum Ankleben von Dura Mater-Ersatzmaterialien an die Dura Mater. Darüber hinaus kann die Klebstoffzusammensetzung auch zur weiteren Absicherung von bereits genähten Wunden eingesetzt werden. Ein weiteres Anwendungsgebiet betrifft schließlich die Behandlung bzw. Versorgung von Schürfwunden. Bezüglich weiterer Merkmale und Einzelheiten zu der Klebstoffzusammensetzung, insbesondere zu den Komponenten a) und b) der Klebstoffzusammensetzung, wird auf die bisherige Beschreibung Bezug genommen.

Weitere Merkmale der Erfindung ergeben sich durch die nachfolgende Beschreibung von bevorzugten Ausführungsformen in Form einer Figurenbeschreibung und von Beispielen in Verbindung mit den Unteransprüchen. Hierbei können einzelne Merkmale der Erfindung alleine oder in Kombination miteinander verwirklicht sein. Die beschriebenen Ausführungsformen dienen lediglich zur Erläuterung und zum besseren Verständnis der Erfindung und sind in keiner Weise einschränkend zu verstehen.

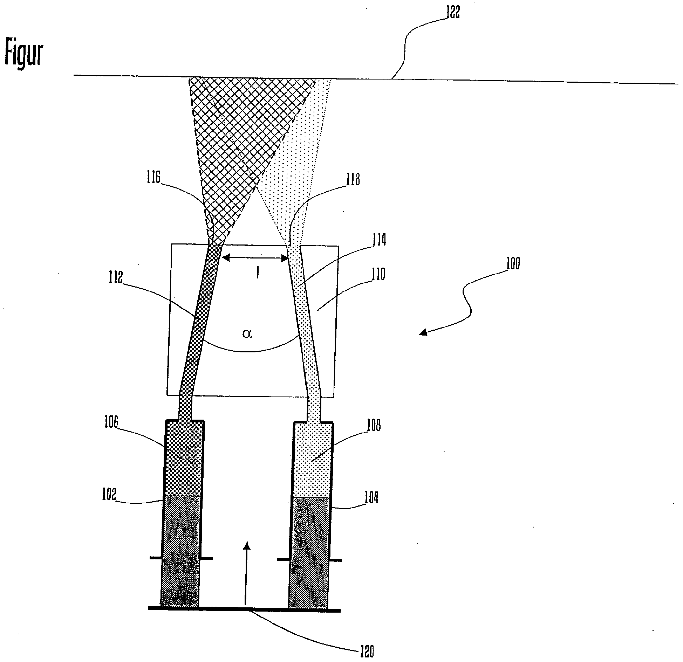

Die Figur zeigt schematisch den Aufbau einer Applikationsvorrichtung für die Ausgabe einer erfindungsgemäßen Klebstoffzusammensetzung.

### Figurenbeschreibung

Die Figur zeigt schematisch den Aufbau einer Applikationsvorrichtung 100 für die Applikation bzw. Ausgabe einer erfindungsgemäßen Klebstoffzusammensetzung. Die Applikationsvorrichtung 100 weist zwei Einzelspritzen 102 und 104 auf, wobei die Einzelspritze 102 mit der Komponente a) 106 und die Einzelspritze 104 mit der Komponente b) 108 befüllt ist. Die Einzelspritzen 102 und 104 sind in einen Konnektor 110 derart eingesteckt, dass die Einzelspritze 102 mit dem Kanal 112 und die Einzelspritze 104 mit dem Kanal 114 des Konnektors 110 verbunden sind. Die Kanäle 112 und 114 münden in die Düsen 116 und 118. Wird der Stempel 120 in die Einzelspritzen 102 und 104 gedrückt, so wird deren Spritzeninhalt 106 bzw. 108 über den Kanal 112 und die Düse 116 bzw. über den Kanal 114 und die Düse 118 auf eine zu versorgende Gewebeoberfläche 122 ausgetragen. Durch den Düsenaustritt werden die Komponenten 106 und 108 fein zerstäubt. Dabei kann der Winkel α sowie der Abstand I zwischen den Kanälen 112 und 114 so gewählt werden, dass sich die Sprühkegel der Komponenten 106 und 108 bei einem vorgegebenen Sprühabstand zur Gewebeoberfläche 122 zumindest teilweise überlappen. Im Überlappungsbereich der Sprühkegel wird bereits die Aushärtung der auf den Komponenten 106 und 108 basierenden Klebstoffzusammensetzung initiiert, so dass bei Kontakt mit der zu versorgenden Gewebeoberfläche 122 bereits nach kurzer Zeit eine fest anhaftende und insbesondere flexible Klebstoffverbindung, vorzugsweise in Form eines Filmes, ausgebildet wird. Dies ist vor allem bei stark blutenden oder stark exsudierenden Wunden von Vorteil.

### Beispiele

### 1. Flexibilitätsuntersuchungen von Klebern, hergestellt aus erfindungsgefäßen Klebstoffzusammensetzungen

Als Komponente a) wurde eine flüssige Mischung in Form einer Lösung aus n-Butyl-Cyanoacrylat (kommerziell erhältlich unter der Bezeichnung Histoacryl®) und dem Weichmacher Glycerintriacetat in den Konzentrationsbereichen n-Butyl-Cyanoacrylat/Glycerintriacetat 90 Gew.-%/10 Gew.-% (nicht erfindungsgemäß) bis n-Butylcyanoacrylat/Glycerintriacetat 10 Gew.-% / 90 Gew.-% hergestellt. Parallel dazu wurden wässrige Gelatinepolysuccinatlösungen (Gelatinepolysuccinat ist beispielsweise unter der Bezeichnung Gelafundin® kommerziell erhältlich) in den Konzentrationsbereichen 1 bis 4 Gew.-% Gelatinepolysuccinat hergestellt. Dabei erwiesen sich vor allem die aus folgenden Klebstoffzusammensetzungen hervorgehenden Kleber als sehr flexibel:
a) n-Butyl-Cyanoacrylat/Glycerintriacetat 70 Gew.-%/30 Gew.-% + 2 Gew.-% Gelatinepolysuccinat
b) n-Butyl-Cyanoacrylat/Glycerintriacetat 60 Gew.-%/40 Gew.-% + 2 Gew.-% bzw. 1,5 Gew.-% Gelatinepolysuccinat
c) n-Butyl-Cyanoacrylat/Glycerintriacetat 50 Gew.-%/50 Gew.-% + 2 Gew.-% bzw. 1,5 Gew.-% Gelatinepolysuccinat
d) n-Butyl-Cyanoacrylat/Glycerintriacetat 40 Gew.-%/60 Gew.-% + 2 Gew.-% bzw. 1,5 Gew.-% Gelatinepolysuccinat
e) n-Butyl-Cyanoacrylat/Glycerintriacetat 30 Gew.-%/70 Gew.-% + 2 Gew.-% bzw. 1,5 Gew.-% Gelatinepolysuccinat.

Der Flexibilitätstest wurde dabei so durchgeführt, dass die durch Mischen der Komponenten a) und b) entstandene Mischung auf eine Polyethylen-Folie aufgetragen und anschließend einem Biegetest unterworfen wurde. Die durch Mischen der oben aufgeführten Komponenten a) und b) entstandenen Gele stellten sich als äußerst flexibel heraus und konnten wiederholt einem Biegetest von 180° unterworfen werden, ohne dass sich Risse im Film bildeten.

### 2. Sprühtest

Eine flüssige Mischung in Form einer Lösung aus n-Butyl-Cyanoacrylat (70 Gew.-%) und Glycerintriacetat (30 Gew.-%) wurde mit einer wässrigen, 1 Gew.-%igen Gelatinepolysuccinatlösung vermischt und anschließend auf einen Defekt eines Rinderpericards versprüht. Der durch das Gel abgedeckte Defekt wurde danach unter Druck gestellt und auf ein Versagen des Verschlusses untersucht. Es stellte sich heraus, dass der Verschluss dabei einem Druck zwischen 100 und 150 mbar stand hielt. Der durch das Gel bewirkte Verschluss des Pericarddefektes blieb auch nach mehrfacher Druckbeaufschlagung intakt.

### 3. Elastizitätsuntersuchungen

a) Die Applikation einer Histoacryl®-GTA(Glycerintriacetat) (70/30)-Gelafundin (2%)-Mischung auf einen mit Luft aufgeblasenen Ballon erfolgte mit Hilfe eines 2-Komponenten-Sprühsystems. Nach der Applikation wurde die Luft abgelassen. Nach einer Wartezeit von 5 Minuten wurde der Ballon einem Füll- und Entleerungszyklus von n=10 unterzogen. Nach 10 Zyklen war keine Veränderung an dem applizierten Film erkennbar. Der Film haftete gut und wies keinerlei Risse auf. Der Versuch wurde nach 30 Minuten erneut durchgeführt, auch dabei konnten keine Veränderungen festgestellt werden. Auch eine Wiederholung nach ca. 20 Stunden ergab keine Veränderung am applizierten Film.
b) Ein Ballon wurde zunächst gefüllt und wieder entleert. Anschließend wurde ein Sprühfilm mit einer Histoacryl®-GTA (Glycerintriacetat) (70/30)-Gelafundin (2 %)-Mischung auf den Ballon appliziert. Nach 5 Minuten (Probe war auspolymerisiert) wurde auch hier ein Füll- und Entleerungszyklus (n=10) durchgeführt. Wie beim Ballonversuch 1 konnten keinerlei Veränderungen des Films festgestellt werden. Auch bei einer Wiederholung nach ca. 20 Stunden wies der Film keine Veränderungen in Aussehen und Funktionalität auf.
c) Mit Hilfe einer Kanüle wurde auf einen Ballon ein Defekt gesetzt, der mit Hilfe einer Histoacryl®-GTA(Glycerintriacetat) (70/30)-Gelafundin (2 %)-Mischung abgedichtet werden sollte. Die Applikation der Mischung erfolgte direkt auf den Defekt bei mit Luft gefülltem Ballon. Anschließend wurde der Ballon entleert und die Dichtigkeit nach 5 Minuten überprüft. Dabei stellte sich heraus, dass der Defekt abgedichtet war. Die Dichtigkeit wurde nochmals nach 30 Minuten mit 10 Wiederholungen und nach 20 Stunden mit 10 Wiederholungen getestet. Der Defekt war nach wie vor abgedichtet.

### 4. Bestimmung der Bruchdehnung

Je 2 ml der in Tabelle 1 wiedergegebenen Komponenten a) und b) wurden in die Kammern einer Doppelkammerspritze gefüllt. Über eine Mischspitze mit einem statischen Mischer wurden die Komponenten a) und b) anschließend gemischt und linienförmig ausgetragen. Die ausgetragene Mischung war nach 30 s vollständig ausgehärtet. Aus der ausgehärteten Mischung wurden Streifen von 10 x 70 mm ausgeschnitten. Die Streifen wurden anschließend in eine Zugprüfmaschine mit hydraulischen Klemmbacken (Abstand: 20 mm) eingespannt und mit einer Geschwindigkeit von 50 mm/min auseinander gezogen. Dabei wurde die maximale Dehnung sowie die hierfür erforderliche maximale Kraft detektiert. Tabelle 1 zeigt die hierbei erhaltenen Ergebnisse.

**Tabelle 1**

| | **Komponente a)** | **Komponente b)** | **Dehnung bei Bruch** | **max. Kraft** |
|---|---|---|---|---|
| Mischung 1 | Histoacryl® + Glycerintriacetat im Verhältnis 60/40 | Gelafundin 2 % | 140 % | 0,5 N |
| Mischung 2 | | Gelafundin 4 % + Sörensenpuffer pH = 5,5 im Verhältnis 1 :1 | 640 % | 1,5 N |
| Mischung 3 | | Histidinlösung 1 % pH =3,0 | 689 % | 2,8 N |

### 5. Bestimmung der Elastizität von ausgehärteten Proben

Verschiedene erfindungsgemäße Klebstoffzusammensetzungen ließ man in Streifen mit 1 cm Breite aushärten. Die Streifen wurden danach abhängig von ihrer grundsätzlichen Dehnbarkeit gedehnt. Anschließend wurde die Zeit gemessen, bis wann die Streifen ihre Ursprungslänge wieder erreichten.

**Tabelle 2**

| **Mischung** | **Ursprungslänge** | | | | | | |
|---|---|---|---|---|---|---|---|
| NBCA/GTA 70/30 + 2% Gelafundin | 4 cm | Zeit | 0 s | 20 s | 60 s | 210 s | 410 s |
| | | Dehnung | 125% | 120% | 118% | 115% | 115% |
| NBCA/GTA 60/40 + 2% Gelafundin | 4 cm | Zeit | 0 s | 10 s | 30 s | 50 s | 90 s |
| | | Dehnung | 200% | 150% | 125% | 113% | 105% |
| NBCA/GTA 55/45 + 2% Gelafundin | 2 cm | Zeit | 0 s | 15s | 60 s | 240 s | - |
| | | Dehnung | 150% | 125% | 115% | 105% | - |
| NBCA/GTA 40/60 + 2% Gelafundin | 3 cm | Zeit | 0 s | 8s | 30 s | 140 s | 300 s |
| | | Dehnung | 167% | 133% | 117% | 107% | 103% |

Die in Tabelle 2 angegebenen Werte machen deutlich, dass die ausgehärteten Klebstoffzusammensetzungen über ausreichend elastische Eigenschaften verfügen, um Gewebebewegungen, wie sie typischerweise bei Lungengewebe und/oder Blutgefäßen auftreten, mitmachen zu können.
NBCA: n-Butyl-Cyanoacrylat
GTA: Glycerintriacetat

### 6. Versiegelung von Leckagen

### Versiegelung einer künstlichen Leckage

Je 1,5 ml der in Tabelle 3 aufgeführten Komponenten a) und b) wurden in die Kammern einer Doppelkammerspritze gefüllt. Auf ein Stück Latex mit 10 x 10 cm wurde ein Loch mit einem Durchmesser von 27 mm gestanzt. Anschließend wurde ein Kunststoffring mit einem Durchmesser von 38 mm aufgesetzt. Danach wurden die Komponenten a) und b) in einer Mischspitze mit statischem Mischer gemischt und in den Kunststoffring ausgetragen. Nach 30 s war jede Mischung zu einem Prüfkörper mit einer Dicke von ca. 3 mm ausgehärtet. Anschließend wurde das Latexstück mit dem so versiegelten Loch auf eine Druckkammer mit einer Öffnung von 60 mm gespannt. Die Druckkammer wurde mit Überdruck beaufschlagt, wobei der Druck gemessen wurde, bei welchem die erste Undichtigkeit auftrat. Bei allen Proben entstanden hierbei im Kleberfilm Löcher, welche einen Durchmesser von wenigen Millimetern aufwiesen. Die Verbindung zum Latex blieb immer intakt.

**Tabelle 3**

| | **Komponente a)** | **Komponente b)** | **max. Druck (n =10)** |
|---|---|---|---|
| Mischung 1 | Histoacryl® + Glycerintriacetat im Verhältnis 60/40 | Gelafundin 2 % | 13 mbar |
| Mischung 2 | | Gelafundin 4 % + Sörensenpuffer pH = 5,5 im Verhältnis 1:1 | 32 mbar |
| Mischung 3 | | Histidinlösung 1 % pH = 3,0 | 61 mbar |

### 7. Bestimmung der Aushärtezeit

a) Je 2 ml der in unten stehender Tabelle 4 wiedergegebenen Komponenten a) und b) wurden in die Kammern einer Doppelkammerspritze gefüllt. In einer Mischspitze mit statischem Mischer wurden die Komponenten a) und b) gemischt und anschließend ausgetragen. Danach wurde in Abhängigkeit der Lager- bzw. Aufbewahrungszeit der in Tabelle 4 wiedergegebenen Klebstoffzusammensetzungen die Zeit bis zur vollständigen Aushärtung bestimmt.

**Tabelle 4**

| | **Komponente a)** | **Komponente b)** | **Aushärtezeit** |
|---|---|---|---|
| Tag 1 | Histoacryl® + Glycerintriacetat im Verhältnis 60:40 | Gelafundin 2 % | 5s |
| | | Gelafundin 4 % + Sörensenpuffer pH = 5,3, Verhältnis 1:1 | 30 s |
| Tag 2 | | Gelafundin 2 % | 30 s |
| | | Gelafundin 4 % + Sörensenpuffer pH = 5,3, Verhältnis 1:1 | 28 s |
| Tag 3 | | Gelafundin 2 % | 60 s |
| | | Gelafundin 4 % + Sörensenpuffer pH = 5,3, Verhältnis 1:1 | 31 s |
| Tag 4 | | Gelafundin 2 % | 20 s |
| | | Gelafundin 4 % + Sörensenpuffer pH = 5,3, Verhältnis 1:1 | 32 s |

b) Je 2 ml der in Tabelle 5 wiedergegebenen Komponenten a) und b) wurden in die Kammern einer Doppelkammerspritze gefüllt. In einer Mischspitze mit statischem Mischer wurden die Komponenten a) und b) gemischt und anschließend ausgetragen. Danach wurde die Zeit bis zur vollständigen Aushärtung der Mischungen bestimmt.

**Tabelle 5**

| | **Komponente a)** | **Komponente b)** | **Aushärtezeit** |
|---|---|---|---|
| | Histoacryl® + Glycerintriacetat im Verhältnis 60/40 | | |
| Mischung 1 | | Histidinlösung 0,01 % pH =5 | 30 s |
| Mischung 2 | | Histidinlösung 0,1 % pH = 7,5 | 2s |
| Mischung 3 | | Histidinlösung 0,1 % pH = 5,6 | 4s |
| Mischung 4 | | Histidinlösung 0,1 % pH =4,8 | 12s |
| Mischung 5 | | Histidinlösung 1 % pH =3,0 | 30 s |

### 8. Lyphilisierung von ausgehärteten Klebstoffzusammensetzungen und anschließende Bestimmung von Porendurchmessern

Je 1,5 ml der in Tabelle 6 aufgeführten Komponenten a) und b) wurden in die Kammern einer Doppelkammerspritze gefüllt. Die Komponenten a) und b) wurden in einer Mischspitze mit statischem Mischer (8 Mischelemente) oder über eine Spraydüse mit integrierter Mischkammer (SK 01M-1006 von Medmix Systems AG) ausgegeben. Die ausgehärteten Proben wurden anschließend während 16 h lyophilisiert und danach unter dem Rasterelektronenmikroskop untersucht. Die lyophilisierten Proben besaßen Poren mit einem Durchmesser wie in Tabelle 6 wiedergegeben.

**Tabelle 6**

| | **Komponente a)** | **Komponente b)** | **Mischer** | **Spraydüse** |
|---|---|---|---|---|
| | | | **Porendurchmesser** | |
| Mischung 1 | Histoacryl® + Glycerintriacetat im Verhältnis 60/40 | Gelafundin 4 % + Sörensenpuffer, pH = 5,5 im Verhältnis 1:1 | <5 µm | <5 µm |
| Mischung 2 | | Histidinlösung 1 % pH =3,0 | 200-300 µm | < 5 µm |

### 9. Vergleichsversuche zwischen Methyl-Cvanoacrylat basierten Klebstoffzusammensetzungen und n-Butyl-Cyanoacrylat basierten Klebstoffzusammensetzungen

Je 1,5 ml der in Tabelle 7 aufgeführten Komponenten a) und b) wurden in die Kammern einer Doppelkammerspritze gefüllt. Anschließend wurden die Komponenten a) und b) mittels einer Spraydüse mit integrierter Mischkammer (SK 01M-1006 von Medmix Systems AG) linienförmig ausgetragen. Die Mischungen waren nach 30 s vollständig ausgehärtet. Aus den ausgehärteten Mischungen wurden Streifen von 10 x 70 mm ausgeschnitten. Diese Streifen wurden in eine Zugprüfmaschine mit hydraulischen Klemmbacken (Abstand: 20 mm) eingespannt und mit einer Geschwindigkeit von 50 mm/min auseinandergezogen. Es wurde die maximale Dehnung sowie die hierfür erforderliche maximale Kraft detektiert. Die Ergebnisse sind in Tabelle 7 gezeigt.

**Tabelle 7**

| | **Komponente a)** | | **Komponente b)** | **Max. Dehnung (in %)** | **Max. Zugkraft (N)** |
|---|---|---|---|---|---|
| | **Bestandteile** | **Mischungsschungsverhältnis** | | | |
| | | | Gelafundin 4 | | |
| Mischung 1 | Methyl-Cyanoacrylat, Glycerintriacetat | 80/20 | | 1,5% | 7,7 |
| Mischung 2 | Methyl-Cyanoacrylat, Glycerintriacetat | 60/40 | % + Sörensenpuffer pH = 5,5 Sörensenpuffer im | 2,0% | 1,86 |
| | Glycerintriacetat | | | | |
| Mischung 3 | n-Butyl-Cyanoacrylat, Glycerintriacetat | 80/20 | | 8,5% | 2,46 |
| Mischung 4 | n-Butyl-Cyanoacrylat, Glycerintriacetat | 60/40 | | 495% | 0,58 |

Die in Tabelle 7 dargestellten Ergebnisse zeigen, dass die n-Butyl-Cyanoacrylat basierten Klebstoffzusammensetzungen im Vergleich zu den Methyl-Cyanoacrylat basierten Klebstoffzusammensetzungen eine deutlich höhere Dehnbarkeit aufwiesen.

### 10. Untersuchung des Haftvermögens von erfindungsgemäßen Klebstoffzusammensetzungen

Folgende Klebstoffzusammensetzungen wurden hergestellt und anschließend jeweils auf eine unverletzte Rinderlunge und eine eine Schnittfläche aufweisende Rinderlunge appliziert:
Zusammensetzung 1:
   Histoacryl®/Glycerintriacetat 60 Gew.-%/40 Gew.-% + 1 Gew.-% Histidin, pH = 3,17
Zusammensetzung 2:
   Histoacryl®/Glycerintriacetat 60 Gew.-%/40 Gew.-% + 2 Gew.-% Histidin, pH = 3,08
Zusammensetzung 3:
   Histoacryl®/Glycerintriacetat 60 Gew.-%/40 Gew.-% + 2 Gew.-% Histidin, pH = 4,77
Zusammensetzung 4:
   Histoacryl®/Glycerintriacetat 60 Gew.-%/40 Gew.-% + 2 Gew.-% Histidin, pH = 5,67

Die Angaben in Gew.-% beziehen sich auf das Gesamtgewicht der jeweiligen Zusammensetzung. Die angegebenen pH-Werte beziehen sich auf den pH-Wert der Komponente b). Die unten stehende Tabelle 8 zeigt die Ergebnisse, welche bei Applikation der Klebstoffzusammensetzungen 1 bis 4 auf eine unverletzte Rinderlunge erhalten wurden.

**Tabelle8: Applikation von erfindungsgemäßen Klebstoffzusammensetzungen auf eine unverletzte Rinderlunge**

| | Aushärtezeit | Haftung | Beobachtungen |
|---|---|---|---|
| Mischung 1: | 22 s | sehr gut | Klebefilm lässt sich nur in kleinen Stücken von der Schnittfläche entfernen; Auftragung eines dickeren Klebefilms (Applikation von 1,5 ml auf eine Fläche von 10x6 cm) |
| Mischung 2: | 10s Kleber härtet zu einem dünnen, flexiblen Film aus | gut | Film lässt sich ablösen; Gewebestückchen werden mit herausgerissen; Kleber verläuft kaum; haftet sehr gut; lässt sich aber abziehen Lungenhaut wird beim Abziehen mit angehoben |
| Mischung 3: | 10 s an dünneren Stellen; 30 s an dickeren Stellen des Films; Kleberoberfläche ist bis 80 s nach Applikation klebrig | sehr gut | lässt sich nicht von der Lunge entfernen |
| Mischung 4: | 5s | sehr gut | Kleber verläuft leicht; Kleber lässt sich nicht abziehen |

Die in unten stehender Tabelle 9 wiedergegebenen Angaben beziehen sich auf die Applikation der Klebstoffzusammensetzungen 1 bis 4 auf eine Schnittfläche einer Rinderlunge

**Tabelle9: Applikation von erfindungsgemäßen Klebstoffzusammensetzungen auf eine Schnittfläche einer Rinderlunge**

| | Aushärtezeit | Haftung | Beobachtungen |
|---|---|---|---|
| Mischung 1: | 10s | sehr gut | Kleber lässt sich kaum entfernen (Gewebereste haften am Kleber) |
| Mischung 3: | 30 s Kleberoberfläche nach 60 s noch klebrig, nach 90 s nicht mehr | sehr gut | Kleber lässt sich nicht abziehen (Kleberstücke, die mit der Pinzette entfernt werden konnten, enthielten Gewebereste) |
| Mischung 4: | 12s | sehr gut | Film lässt sich nicht abziehen; Gewebereste haften am Kleber |

## Patentansprüche

1. Klebstoffzusammensetzung, umfassend zumindest folgende Komponenten a) und b):
a) eine flüssige Mischung, umfassend Cyanoacrylat-Monomere und zumindest einen Weichmacher, wobei der zumindest eine Weichmacher in der Komponente a) einen Anteil größer als 10 Gew.-%, bezogen auf das Gesamtgewicht der Komponente a), aufweist und
b) eine wässrige Flüssigkeit, umfassend zumindest eine Verbindung aus der Gruppe basische Aminosäure und Gelatinederivat, wobei es sich bei dem Gelatinederivat um acylierte Gelatine handelt.

2. Klebstoffzusammensetzung nach Anspruch 1, **dadurch gekennzeichnet, dass** die Komponenten a) und b) räumlich voneinander getrennt vorliegen.

3. Klebstoffzusammensetzung nach Anspruch 1 oder 2, **dadurch gekennzeichnet, dass** die Komponente a) als Lösung vorliegt.

4. Klebstoffzusammensetzung nach einem der vorhergehenden Ansprüche, **dadurch gekennzeichnet, dass** sie durch Vermischen der Komponenten a) und b) zu einem Gel, einer Paste oder einer flexiblen Membran aushärtbar ist.

5. Klebstoffzusammensetzung nach einem der vorhergehenden Ansprüche, **dadurch gekennzeichnet, dass** der zumindest eine Weichmacher in der Komponente a) einen Anteil größer als 20 Gew.-%, bezogen auf das Gesamtgewicht der Komponente a), aufweist.

6. Klebstoffzusammensetzung nach einem der vorhergehenden Ansprüche, **dadurch gekennzeichnet, dass** die Komponenten a) und b) in einem Volumen-Mischungsverhältnis zwischen 1:10 und 10:1 vorliegen.

7. Klebstoffzusammensetzung nach einem der vorhergehenden Ansprüche, **dadurch gekennzeichnet, dass** die Cyanoacrylat-Monomere aus der Gruppe Alkyl-Cyanoacrylat-Monomere, Alkoxyalkyl-Cyanoacrylat-Monomere, Alkylester-Cyanoacrylat-Monomere und Mischungen davon ausgewählt sind.

8. Klebstoffzusammensetzung nach einem der vorhergehenden Ansprüche, **dadurch gekennzeichnet, dass** der zumindest eine Weichmacher aus der Gruppe Zitronensäureester, Glycerinester, Sebacinsäureester, Fettsäureester, Celluloseester, Polyethylenglykolether und Mischungen davon ausgewählt ist.

9. Klebstoffzusammensetzung nach einem der vorhergehenden Ansprüche, **dadurch gekennzeichnet, dass** die zumindest eine Verbindung in der Komponente b) einen Anteil zwischen 0,01 und 25 Gew.-%, bezogen auf das Gesamtgewicht der Komponente b), aufweist.

10. Klebstoffzusammensetzung nach einem der vorhergehenden Ansprüche, **dadurch gekennzeichnet, dass** die basische Aminosäure aus der Gruppe Histidin, Lysin, Arginin, Derivate davon und Mischungen davon ausgewählt ist.

11. Klebstoffzusammensetzung nach einem der vorhergehenden Ansprüche, **dadurch gekennzeichnet, dass** das Gelatinederivat aus der Gruppe Gelatinepolysuccinat, acetylierte Gelatine und Phthaloyl-Gelatine ausgewählt ist.

12. Klebstoffzusammensetzung nach einem der vorhergehenden Ansprüche, **dadurch gekennzeichnet, dass** die Komponente b) als wässrige Lösung vorliegt.

13. Klebstoffzusammensetzung nach einem der vorhergehenden Ansprüche zur Verwendung als medizinische Klebstoffzusammensetzung.

14. Klebstoffverbindung, hergestellt oder herstellbar aus einer Klebstoffzusammensetzung nach einem der vorhergehenden Ansprüche.

15. Kit, umfassend zwei Behältnisse, **dadurch gekennzeichnet, dass** das eine Behältnis die Komponente a) und das andere Behältnis die Komponente b) der Klebstoffzusammensetzung nach einem der vorhergehenden Ansprüche enthält.

16. Applikationsvorrichtung, enthaltend eine Klebstoffzusammensetzung nach einem der Ansprüche 1 bis 13.

## Claims

1. An adhesive composition, comprising at least the following components a) and b):
a) a liquid mixture, including cyanoacrylate monomers and at least one plasticizer, wherein the proportion of the at least one plasticizer in component a) is greater than 10% by weight, based on the total weight of component a), and
b) an aqueous liquid, including at least one compound from the group of basic amino acid and gelatin derivative, wherein the gelatin derivative is acylated gelatin.

2. The adhesive composition according to claim 1, **characterized in that** the components a) and b) are present spatially separated from one another.

3. The adhesive composition according to claim 1 or 2, **characterized in that** the component a) is present in the form of a solution.

4. The adhesive composition according to any of the preceding claims, **characterized in that** it can be cured by mixing the components a) and b) to give a gel, a paste or a flexible membrane.

5. The adhesive composition according to any of the preceding claims, **characterized in that** the proportion of the at least one plasticizer in component a) is greater than 20% by weight, based on the total weight of component a).

6. The adhesive composition according to any of the preceding claims, **characterized in that** the components a) and b) are present in a mixing ratio of between 1:10 and 10:1 by volume.

7. The adhesive composition according to any of the preceding claims, **characterized in that** the cyanoacrylate monomers are selected from the group of alkyl cyanoacrylate monomers, alkoxyalkyl cyanoacrylate monomers, alkyl ester cyanoacrylate monomers and mixtures thereof.

8. The adhesive composition according to any of the preceding claims, **characterized in that** the at least one plasticizer is selected from the group of citric esters, glycerol esters, sebacic esters, fatty acid esters, cellulose esters, polyethylene glycol ethers and mixtures thereof.

9. The adhesive composition according to any of the preceding claims, **characterized in that** the proportion of the at least one compound in component b) is between 0.01 and 25% by weight, based on the total weight of component b).

10. The adhesive composition according to any of the preceding claims, **characterized in that** the basic amino acid is selected from the group of histidine, lysine, arginine, derivatives thereof and mixtures thereof.

11. The adhesive composition according to any of the preceding claims, **characterized in that** the gelatin derivative is selected from the group of gelatin polysuccinate, acetylated gelatin and phthaloyl gelatin.

12. The adhesive composition according to any of the preceding claims, **characterized in that** component b) is present in the form of an aqueous solution.

13. The adhesive composition according to any of the preceding claims for use as medical adhesive composition.

14. An adhesive compound, prepared or preparable from an adhesive composition according to any of the preceding claims.

15. A kit, comprising two containers, **characterized in that** one container includes component a) and the other container includes component b) of the adhesive composition according to any of the preceding claims.

16. An application device, comprising an adhesive composition according to any of claims 1 to 13.

## Revendications

1. Composition adhésive, comprenant au moins les composants suivants a) et b):
a) un mélange liquide, comprenant des monomères de cyanoacrylate et au moins un plastifiant, ledit au moins un plastifiant présentant, dans le composant a), une proportion supérieure à 10% en poids, par rapport au poids total du composant a) et
b) un liquide aqueux, comprenant au moins un composé du groupe formé par un acide aminé basique et un dérivé de gélatine, le dérivé de gélatine étant une gélatine acylée.

2. Composition adhésive selon la revendication 1, **caractérisée en ce que** les composants a) et b) sont séparés l'un de l'autre dans l'espace.

3. Composition adhésive selon la revendication 1 ou 2, **caractérisée en ce que** le composant a) se trouve sous forme de solution.

4. Composition adhésive selon l'une quelconque des revendications précédentes, **caractérisée en ce qu'**elle est durcissable par mélange des composants a) et b) en un gel, une pâte ou une membrane souple.

5. Composition adhésive selon l'une quelconque des revendications précédentes, **caractérisée en ce que** ledit au moins un plastifiant dans le composant a) présente une proportion supérieure à 20% en poids, par rapport au poids total du composant a).

6. Composition adhésive selon l'une quelconque des revendications précédentes, **caractérisée en ce que** les composants a) et b) se trouvent dans un rapport de mélange volumique entre 1:10 et 10:1.

7. Composition adhésive selon l'une quelconque des revendications précédentes, **caractérisée en ce que** les monomères de cyanoacrylate sont choisis dans le groupe formé par les monomères de cyanoacrylate d'alkyle, les monomères de cyanoacrylate d'alcoxyalkyle, les monomères de cyanoacrylate d'esters d'alkyle et leurs mélanges.

8. Composition adhésive selon l'une quelconque des revendications précédentes, **caractérisée en ce que** ledit au moins un plastifiant est choisi dans le groupe formé par les esters de l'acide citrique, les esters de glycérol, les esters de l'acide sébacique, les esters d'acide gras, les esters de cellulose, les polyéthylèneglycoléthers et leurs mélanges.

9. Composition adhésive selon l'une quelconque des revendications précédentes, **caractérisée en ce que** ledit au moins un composé dans le composant b) présente une proportion entre 0,01 et 25% en poids par rapport au poids total du composant b).

10. Composition adhésive selon l'une quelconque des revendications précédentes, **caractérisée en ce que** l'acide aminé basique est choisi dans le groupe formé par l'histidine, la lysine, l'arginine, leurs dérivés et leurs mélanges.

11. Composition adhésive selon l'une quelconque des revendications précédentes, **caractérisée en ce que** le dérivé de gélatine est choisi dans le groupe formé par le polysuccinate de gélatine, la gélatine acétylée et la gélatine de phtaloyle.

12. Composition adhésive selon l'une quelconque des revendications précédentes, **caractérisée en ce que** le composant b) se trouve sous forme de solution aqueuse.

13. Composition adhésive selon l'une quelconque des revendications précédentes destinée à être utilisée comme composition adhésive médicale.

14. Composé adhésif, préparé ou pouvant être préparé à partir d'une composition adhésive selon l'une quelconque des revendications précédentes.

15. Kit, comprenant deux récipients, **caractérisé en ce qu'**un récipient contient le composant a) et l'autre récipient contient le composant b) de la composition adhésive selon l'une quelconque des revendications précédentes.

16. Dispositif d'application contenant une composition adhésive selon l'une quelconque des revendications 1 à 13.
